Europäisches Patentamt

European Patent Office

Office européen des brevets

(11) Veröffentlichungsnummer: **0 299 911 B1**

(12) **EUROPÄISCHE PATENTSCHRIFT**

(45) Veröffentlichungstag der Patentschrift: **16.09.92**

(51) Int. Cl.⁵: **G09B 19/16**

(21) Anmeldenummer: **88730159.6**

(22) Anmeldetag: **15.07.88**

(54) **Lehrmittel für die Ausbildung von Führern von Verkehrsmitteln.**

(30) Priorität: **17.07.87 DE 8709849 U**

(43) Veröffentlichungstag der Anmeldung:
**18.01.89 Patentblatt 89/03**

(45) Bekanntmachung des Hinweises auf die
Patenterteilung:
**16.09.92 Patentblatt 92/38**

(84) Benannte Vertragsstaaten:
**AT BE CH DE ES FR GB GR IT LI LU NL SE**

(56) Entgegenhaltungen:
**EP-A- 0 145 598**
**FR-A- 2 466 063**
**GB-A- 2 128 842**

(73) Patentinhaber: **Beckers, Johann Peter**
**Hohenzollerndamm 20**
**W-1000 Berlin 31(DE)**

Patentinhaber: **Beckers, Peter Theodor**
**Hohenzollerndamm 20**
**W-1000 Berlin 31(DE)**

(72) Erfinder: **Beckers, Johann Peter**
**Hohenzollerndamm 20**
**W-1000 Berlin 31(DE)**
Erfinder: **Beckers, Peter Theodor**
**Hohenzollerndamm 20**
**W-1000 Berlin 31(DE)**

(74) Vertreter: **Scholz, Hartmut, Dipl.-Ing.**
**Bundesallee 74**
**W-1000 Berlin 41 (Friedenau)(DE)**

**Beschreibung**

Die Erfindung betrifft ein Lehrmittel für die Ausbildung von Führern von Verkehrsmitteln, mit mindestens einer Videokamera zum Einbau in ein als mobiles Übungsgerät ausgerüstetes Verkehrsmittel zum Einsatz während des praktischen Übungsbetriebs mit dem Übungsgerät, und mit einem Monitor zur optischen Wiedergabe der von der Videokamera aufgenommenen Impulse.

Zum Erlernen des Führens derartiger Verkehrsmittel, beispielsweise von Land- oder Luftfahrzeugen, wird als praktisches Übungsgerät ein handelsübliches Fahrzeug zur Bedienung durch den Fahrschüler und den Fahrlehrer umgerüstet. Während der praktischen Fahrübungen erklärt der Fahrlehrer seinem Schüler die verschiedenen Fahrübungen und dieser muß sie sich einprägen, nachvollziehen und üben. Nachteilig ist dabei, daß der Fahrlehrer die Fahrübungen und Verkehrssituationen jedem Schüler einzeln und wiederholt erklären muß. Dies ist zeit- und kostenaufwendig. Dazu ist es aus der FR-A-2 466 063 bekannt, ein Schulungsfahrzeug mit einer Videokamera auszurüsten, um Schulungsfahrten aufzeichnen zu können. Eine Vertiefung der erlebten Übung ist dabei jedoch nur bei wiederholter Betrachtung gewährleistet und deshalb bei dieser bekannten Ausführung nur sehr eingeschränkt möglich. Vielfach nehmen auch mehrere Schüler an einer Übungsfahrt teil und lernen dabei schon verschiedene Übungen durch Zuschauen, aber auch diese Schüler können die Übungen nicht vertiefen.

Aufgabe der vorliegenden Erfindung ist es, ein Lehrmittel zu schaffen, mit dem praktische Verkehrsübungen einem oder mehreren Schülern vorgeführt und von diesen individuell und beliebig oft wiederholt werden können.

Gelöst wird diese Aufgabe dadurch, daß mehrere Aufzeichnungsgeräte zur vervielfachten Aufzeichnung der von der Videokamera gelieferten Impulse vorgesehen sind.

Durch diese Maßnahmen wird ein Lehrmittel geschaffen, mit dem die praktische Fahrübung aufgezeichnet werden kann; zugleich werden die Erklärungen des Fahrlehrers aufgezeichnet. Bei interessanten Verkehrssituationen, Fahr- oder Verhaltensfehlern oder sonstigen Begebenheiten im Straßenverkehr kann der Fahrlehrer anhalten lassen, die Aufzeichnung zurückspulen und den Schülern sofort erklären. Nach Abschluß der Übung kann jedem Teilnehmer an dieser Fahrt eine Kopie der Aufzeichnung zur Verfügung gestellt werden, und die Schüler können die Übung zu Hause beliebig oft abspielen und auswerten. Dadurch wird eine Vertiefung des Gelernten erzielt und der Fahr- oder Fluglehrer kann gleichzeitig mehrere Schüler betreuen; dies spart Zeit und Kosten. Zugleich können diese Aufzeichnungen zur Bestückung von lebensnahen Fahr- oder Flugsimulatoren verwendet werden, insbesondere beim Einsatz mehrerer Videokameras, die in Rundumsicht blickend angeordnet sind. Durch entsprechende Schaltungen lassen sich die Impulse aller Videokameras mit jedem der Aufnahmegeräte nebeneinander und gleichzeitig speichern, so daß später auf dem Monitor ein Rundumbild der gesamten durchlaufenen Verkehrssituation wiedergegeben werden kann.

Bei einer für die Kraftfahrausbildung bestimmten Ausführung der Erfindung ist es vorgesehen, daß das mobile Übungsgerät ein Schulungsfahrzeug mit einem Platz zur direkten Schulung und mit weiteren Plätzen ist und zur Anfertigung von Kopien einer mit einer Videokamera aufgezeichneten Schulungsfahrt für jeden besetzten Platz ein Aufzeichnungsgerät vorgesehen ist. Durch diese Maßnahmen kann dem direkt beschulten Fahrschüler ebenso wie dem Fahrlehrer und/oder ggf. mitfahrenden Schülern eine Kopie der Aufzeichnung der absolvierten Schulungsfahrt gezogen bzw. gleich während der Schulungsfahrt angefertigt werden.

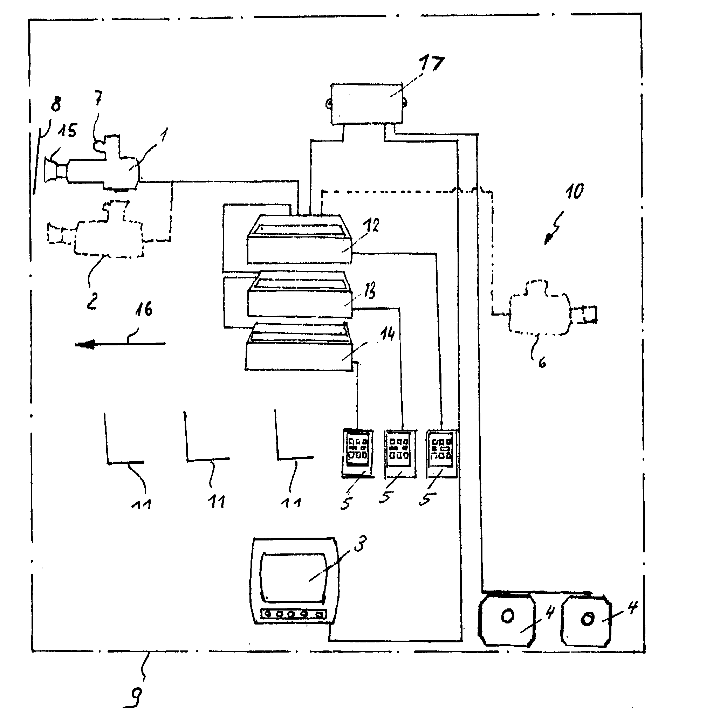

Weitere vorteilhafte Maßnahmen sind in den Unteransprüchen beschrieben. Die Erfindung ist in der beiliegenden Zeichnung dargestellt und wird nachfolgend näher beschrieben.

Das in der einzigen Figur dargestellte Lehrmittel 10 ist in einem mobilen Übungsgerät 9, beispielsweise einem Kraftfahrzeug oder einem Flugzeug eingebaut und besteht in wesentlichen aus einer in Fahrtrichtung 16 blickenden Videokamera 1 und einem oder mehreren elektronischen Aufzeichnungsgeräten 12, 13 und 14. Die Videokamera 1 ist mit dem ersten Aufzeichnungsgerät 12 verbunden, während die anderen Aufzeichnungsgeräte 13 und 14 mit dem ersten Aufzeichnungsgerät 12 in Reihe geschaltet sind. Dadurch werden gleichzeitig mehrere Kopien der Aufzeichnung angefertigt, wobei die Anzahl der Aufzeichnungsgeräte abhängig von der Anzahl Schulungsplätze 11 für gleichzeitig in dem Übungsgerät 9 mitfahrenden und unterrichteten Schüler ist.

Um auch das Verkehrsgeschehen rechts und links neben den eigenen Übungsgerät 9 (Fahrzeug) bzw den von hinten kommenden Verkehr aufnehmen zu können, sind bei einer Ausführung seitlich gerichtet, weitere Videokameras 2 und/oder mindestens eine rückwärtsgerichtete Videokamera 6 vorgesehen. Die Videokameras 1, 2 oder 6 können mit Weitwinkelobjektiven 15 ausgerüstet sein.

Um bestimmte Situationen oder Vorkommnisse gleich an Ort und Stelle analysieren, auswerten und besprechen zu können, ist ein Monitor 3 vorgesehen, auf den eine der Aufzeichnungen überspielt werden kann. Dem Fahrlehrer steht dazu Fernbedienungen 5 zur Verfügung, mit der er wahlweise eines oder alle Aufzeichnungsgeräte 12, 13 und 14 bedienen kann.

In die Vidoekamera 1 ist ein Mikrophon 7 integriert, mit dem Fragen, Erklärungen oder Geräusche als Audioaufzeichnungen aufgenommen werden können. Zur Wiedergabe dieser Audioaufzeichnungen sind Lautsprecher 4 vorgesehen. Zur Kontrolle des rückwärtigen Verkehr kann der in Fahrtrichtung 16 gerichtet Videokamera 1 auch ein eigener, weiterer Rückblickspiegel 8 zugeordnet sein.

Zum Betreib des Lehrmittels 10 ist deises mit einem Kraftanschluß 17 versehen, mit dem es an die Engergieversorgung des Übunsgeräts 9 angeschlossen ist. Anstelle einer Vielzahl von Aufzeichnungsgeräten kann auch ein Aufzeichnungsgerät verwendet werden, mit dem Sofort und in kurzer Zeit beliebig viele Kopien gemacht werden können.

Bezugszeichen

| | |
|---|---|
| 1 | Videokamera |
| 2 | seitliche Videokamera |
| 3 | Monitor |
| 4 | Lautsprecher |
| 5 | Fernbedienung |
| 6 | rückwärtige Videokamera |
| 7 | Mikrophon |
| 8 | weiteren Rückblickspiegel |
| 9 | Übungsgerät |
| 10 | Lehrmittel |
| 11 | Schulungsplatz |
| 12 | Aufnahmegerät |
| 13 | Aufnahmegerät |
| 14 | Aufnahmegerät |
| 15 | Weitwinkelobjektiv |
| 16 | Fahrtrichtung |
| 17 | Kraftanschluß |

**Patentansprüche**

1. Lehrmittel für die Ausbildung von Führern von Verkehrsmitteln, mit mindestens einer Videokamera zum Einbau in ein als mobiles Übungsgerät ausgerüstetes Verkehrsmittel zum Einsatz während des praktischen Übungsbetriebs mit dem Übungsgerät, und mit einem Monitor zur optischen Wiedergabe der von der Videokamera aufgenommenen Impulse, dadurch gekennzeichnet, daß mehrere Aufzeichnungsgeräte (12, 13, 14) zur vervielfachten Aufzeichnung der von der Videokamera (1) gelieferten Impulse vorgesehen sind.

2. Lehrmittel nach Anspruch 1, dadurch gekennzeichnet, daß die Videokamera (1) mit einem ersten Aufzeichnungsgerät (12) verbunden ist und die anderen Aufzeichnungsgeräte (13, 14) mit dem ersten Aufzeichnungsgerät (12) in Reihe geschaltet sind.

3. Lehrmittel nach den Ansprüchen 1 und 2, dadurch gekennzeichnet, daß jedes der Aufzeichnungsgeräte (12, 13, 14) mit Fernbedienungseinrichtungen (5) steuerbar sind und sämtliche Fernbedienungseinrichtungen (5) zentral in dem Übungsgerät (9) angeordnet sind.

4. Lehrmittel nach den Ansprüchen 1 bis 3, dadurch gekennzeichnet, daß der Monitor (3) wahlweise mit Lautsprechern (4) ausgerüstet ist oder die Lautsprecher (4) getrennt von dem Monitor (3) angeordnet sind.

5. Lehrmittel nach den Ansprüchen 1 bis 4, dadurch gekennzeichnet, daß ein Mikrophon (7) vorgesehen ist, wobei das Mikrophon (7) in der Videokamera (1) integriert ist.

6. Lehrmittel nach den Ansprüchen 1 bis 5, dadurch gekennzeichnet, daß in dem Übungsgerät (9) ein Rückblickspiegel (8) im Aufnahmebereich der Videokamera (1) angeordnet ist.

7. Lehrmittel nach den Ansprüchen 1 bis 6, dadurch gekennzeichnet, daß die Videokammera (1) mit einem Weitwinkelobjektiv (15) ausgerüstet ist.

8. Lehrmittel nach den Ansprüchen 1 bis 7, dadurch gekennzeichnet, daß das Übungsgerät (9) mi weiteren, seitlich gerichteten Videokameras (2) ausgerüstet ist.

9. Lehrmittel nach den Ansprüchen 1 bis 8, dadurch gekennzeichnet, daß das Übungsgerät (9) mit mindestens einer nach rückwärts gerichteten Videokamera (6) ausgerüstet ist.

10. Lehrmittel nach den Ansprüchen 1 bis 9, dadurch gekennzeichnet, daß das mobile Übungsgerät ein Schulungsfahrzeug (9) mit einem Platz (11) zur direkten Schulung und mit weiteren Plätzen (11) ist und zur Anfertigung von Kopien einer mit einer Videokamera (1) aufgezeichneten Schulungsfahrt für jeden besetzten Platz (11) ein Aufzeichnungsgerät (12, 13, 14) vorgesehen ist.

**Claims**

1. Teaching aid for training the drivers of conveyances, comprising at least one video camera for installation in a conveyance equipped as a practicing device for use in practising operations using the practising device, and a monitor for optically displaying the impulses received from the video camera, characterized by having a plurality of recording devices (12, 13, 14) for multiply recording the pulses provided by video camera (1).

2. Teaching aid according to claim 1, characterized in that video camera (1) is linked with a first recording device (12) and in that the other recording devices (13, 14) are connected in series with first recording device (12).

3. Teaching aid according to claims 1 and 2, characterized by the recording devices (12, 13, 14) each being controllable by remote control means (5) and by all remote control means (5) being centrally located in practising device (9).

4. Teaching aid according to claims 1 to 3, characterized by monitor (3) being selectively equipped with loudspeakers (4) or by loudspeakers (4) being arranged seperate from monitor (3).

5. Teaching aid according to claims 1 to 4, characterized by a microphone (7) being provided, with microphone (7) being integrated in video camera (1).

6. Teaching aid according to claims 1 to 5, characterized by practicing device (9) having integrated therein a rear-view mirror (8) located in the viewing area of video camera (1).

7. Teaching aid according to claims 1 to 6, characterized in that video camera (1) is equipped with a wide-angle lens (15).

8. Teaching aid according to claims 1 to 7, characterized by practicing device (9) being equipped with additional video cameras (2) arranged laterally thereof.

9. Teaching aid according to claims 1 to 8, characterized by practicing device (9) being equipped with at least one rearwardly directed video camera (6).

10. Teaching aid according to claims 1 to 9, characterized by the mobile practicing device being a training vehicle (9) having one direct training position (11) and additional positions (11), and there being provided one recording device (12, 13, 14) for each occupied positions (11) for making copies of a training trip recorded by means of a video camera (1).

**Revendications**

1. Appareil pédagogique pour la formation des conducteurs de moyens de transport, muni d'au moins une caméra vidéo destinée à être montée dans un moyen de transport équipé e engin-école mobile, et destinée à être utilisée durant l'exercice pratique sur l'engin-école, et muni d'un moniteur de restitution optique des impulsions enregistrées par la caméra vidéo, caractérisé par la présence de plusieurs appareils enregistreus (12, 13, 14) servant a l'enregistrement multiple des impulsions livrée par la caméra vidéo (1).

2. Appareil pédagogique selon la revendication 1, caractérisé par le fait que la caméra vidéo (1) est reliée à un premier appareil enregistreur (12) et que le autres appareils enregistreurs (13, 14) sont montés en serie avec le premier (12).

3. Appareil pédagogique selon les revendications 1 et 2, caractérisé par le fait que chaque appareil enregistreur (12, 13, 14) peut être commandé par des dispositifs de télécommande (5) et que tous le dispositifs de télécommande (5) sont placés de facon centrale das l'engin-école (9).

4. Appareil pédagogique 1 à 3, caractérisé soit par le fait que le moniteur (3) est équipé de microphones (4), soit par le fait que les microphones (4) sont extérieurs au moniteur (3).

5. Appareil pédagogique 1 à 4, caractérisé par la présence d'un microphone (7), ce microphone (7) étant intégré à la caméra vidéo (1).

6. Appareil pédagogique 1 à 5, caractérisé par le fait que dans l'engin-école (9), un rétrouviseur (8) est placé dans le champ de prise de vue de la caméra vidéo (1).

7. Appareil pédagogique 1 à 6, caractérisé par le fait que la caméra vidéo (1) est équipée d'un objectif grand-angulaire (15).

8. Appareil pédagogique 1 à 7, caractérisé par le fait que l'engin-école (9) est équipé de caméras vidéo supplémentaires, dirigées latéralement (2).

9. Appareil pédagogique 1 à 8, caractérisé par le fait que l'engin-ecole (9) est equipe d'au moins une caméra vidéo dirigée vers l'arrière.

10. Appareil pédagogique 1 à 9, caractérisé par le fait que l'engin-école mobile (9) est un véhicule-ecole disposant d'une place (11) pour

**EP 0 299 911 B1**

la formation directe et d'autres places (11) et qu'un appareil enregistreur (12, 13, 13) est prévu pour chaque place occupée (11) afin de produire des copies d'une leçon de conduite filmée par caméra vidéo (1).